# EUROPÄISCHE PATENTSCHRIFT

(11) **EP 3 525 356 B1**
(45) Veröffentlichungstag und Bekanntmachung des Hinweises auf die Patenterteilung: **28.09.2022**
(21) Anmeldenummer: 18156282.8
(22) Anmeldetag: 12.02.2018
(51) Int. Cl.: H04B 3/32, H04B 3/54, H04B 3/30, H04B 3/50

(54) **KOMMUNIZIEREN ÜBER EINE KOMMUNIKATIONSLEITUNG**
COMMUNICATION VIA A COMMUNICATION LINE
PROCÉDÉ DE COMMUNICATION À L'AIDE D'UNE LIGNE DE COMMUNICATION

(43) Veröffentlichungstag der Anmeldung: 14.08.2019
(73) Patentinhaber: Siemens Aktiengesellschaft, 80333 München (DE)
(72) Erfinder: Linzmaier, Klaus-Peter, 73650 Winterbach (DE); Mittnacht, Tobias, 70190 Stuttgart (DE)

(56) Entgegenhaltungen:
- WO-A1-2015/026972
- US-A1- 2014 086 290
- US-A1- 2014 269 868
- US-B1- 7 580 344

## Beschreibung

Die Erfindung betrifft ein Verfahren zum Kommunizieren zwischen jeweils wenigstens zwei Kommunikationsendgeräten, die an eine jeweilige von wenigstens zwei zumindest teilweise induktiv und/oder kapazitiv gekoppelten Kommunikationsleitungen angeschlossen sind. Bei dem Verfahren wird zum Kommunizieren über die jeweilige der wenigstens zwei Kommunikationsleitungen ein Kommunikationsprotokoll genutzt, das ein Senden und ein Empfangen von Kommunikationssignalen der jeweiligen der wenigstens zwei Kommunikationsendgeräte regelt, zu welchem Zweck Signalträger genutzt werden. Die Signalträger können dabei mittels wenigstens eines durch das Kommunikationsprotokoll vorgegebenen Modulationsverfahrens entsprechend der Kommunikationssignale moduliert werden.

Darüber hinaus betrifft die Erfindung auch eine Kommunikationseinrichtung zum Kommunizieren, mit wenigstens zwei zumindest teilweise induktiv und/oder kapazitiv gekoppelten Kommunikationsleitungen, und jeweils wenigstens zwei an die wenigstens zwei Kommunikationsleitungen angeschlossenen Kommunikationsendgeräten, um zum Kommunizieren eine leitungsgebundene Kommunikationsverbindung über die jeweilige der Kommunikationsleitungen zu nutzen, wobei die jeweils wenigstens zwei Kommunikationsendgeräte ausgebildet sind, zum Kommunizieren über die jeweilige der wenigstens zwei Kommunikationsleitungen ein Kommunikationsprotokoll zu nutzen, das ein Senden und ein Empfangen von Kommunikationssignalen der jeweiligen der wenigstens zwei Kommunikationsendgeräte regelt, zu welchem Zweck Signalträger vorgesehen sind. Die Signalträger können dabei mittels wenigstens eines durch das Kommunikationsprotokoll vorgegebenen Modulationsverfahrens entsprechend der Kommunikationssignale modulierbar sein. Schließlich betrifft die Erfindung auch ein Kommunikationsendgerät.

Verfahren, Kommunikationseinrichtungen sowie auch Kommunikationsendgeräte der gattungsgemäßen Art sind im Stand der Technik umfänglich bekannt, sodass es eines diesbezüglichen Nachweises des Stands der Technik dem Grunde nach nicht bedarf. Sie dienen dem Grunde nach dazu, eine oder mehrere Kommunikationsverbindungen zwischen den wenigstens zwei Kommunikationsgeräten, die an die jeweilige Kommunikationsleitung angeschlossen sind, zu ermöglichen.

Die Kommunikationsleitungen sind in der Regel durch ein elektrisches Kabel gebildet, welches entsprechende elektrische Leitungen aufweist, die zum Übertragen von elektrischen Signalen, nämlich den Kommunikationssignalen, dienen können. Diese können zum Beispiel Zwei- oder Mehrdrahtleitungen sein, die speziell für die Bereitstellung von Kommunikationsverbindungen genutzt werden. Es können jedoch auch Energieversorgungsleitungen sein, die ergänzend zum Übertragen von elektrischer Energie auch zum Herstellen einer leitungsgebundenen Kommunikationsverbindung dienen können. Die Kommunikationsleitung nutzt in der Regel wenigstens zwei elektrische Leiter, die dazu dienen, die elektrischen Signale übertragen zu können.

Um eine Kanalkapazität der durch die Kommunikationsleitung bereitgestellten leitungsgebundenen Kommunikationsverbindung zu verbessern, ist es im Stand der Technik bekannt, die Kommunikationsverbindung mehrkanalig auszugestalten. Dies kann zum Beispiel unter Nutzung von Trägerfrequenzsystemen oder dergleichen erfolgen. Hierbei erfolgt die Übermittlung von Kommunikationssignalen derart, dass Signalträger, gelegentlich auch Trägersignale oder einfach nur Träger genannt, bereitgestellt werden, mittels denen unabhängig voneinander nutzbare Kanäle der leitungsgebundenen Kommunikationsverbindung bereitgestellt werden können, sodass eine mehrkanalige leitungsgebundene Kommunikationsverbindung ermöglicht ist.

Das vorgenannte Verfahren wird beispielsweise in der US 2014/0269868 A1 offenbart. Bei dieser mehrkanaligen Leistungsmessung werden die Träger oder Unterträger in einem Kommunikationsbaustein bestimmt, wodurch eine Filterdatenbank bereitgestellt wird.

Die WO 2015/026972 A1 offenbart ein Verfahren zur Reduzierung der Sendeleistung in einer Powerlineumgebung.

Die Signalträger stellen hier vorzugsweise die elektrischen Signale bereit, die die Kommunikationsleitung beziehungsweise deren elektrischen Leitungen unmittelbar beaufschlagen. Dabei kann ein Signalträger durch eine sich periodisch ändernde Größe, zum Beispiel eine Wechselspannung, eine elektromagnetische Welle, ein Wechselstrom und/oder dergleichen gebildet sein. Die Größe kann konstante charakteristische Parameter aufweisen, zum Beispiel eine Frequenz, eine Amplitude, ein Tastgrad, eine Phasenlage und/oder dergleichen. Signalträger kommen daher zur Anwendung, um die Kommunikationssignale als Nutzsignale beispielsweise mittels eines Trägerfrequenzverfahrens oder dergleichen über die jeweilige der Kommunikationsleitungen übertragen zu können.

Um das Übertragen der Kommunikationssignale mittels der Signalträger zu ermöglichen, können diese Signalträger gemäß einem durch das Kommunikationsprotokoll vorgegebenen Modulationsverfahren entsprechend der Kommunikationssignale moduliert werden. Das Modulieren kann sendeseitig durch eine Sendeeinrichtung realisiert werden, die vorzugsweise einen geeigneten Modulator aufweist. Sendeseitig können die so modulierten Signalträger auf die Kommunikationsleitung aufgegeben werden, beispielsweise mittels der Sendeeinrichtung eines ersten der wenigstens zwei des Kommunikationsendgeräte oder dergleichen, welches die Kommunikationssignale aussendet.

Das wenigstens eine zweite der Kommunikationsendgeräte, welches die modulierten Signalträger empfängt, kann diese Signale mittels einer geeigneten Empfangseinrichtung empfangen und gemäß dem durch das Kommunikationsprotokoll vorgegebenen Modulationsverfahren mittels eines geeigneten Demodulators der Empfangseinrichtung entsprechend demodulieren, sodass am zweiten Kommunikationsendgerät die ursprünglich zu übermittelnden Kommunikationssignale wieder zur Verfügung stehen. Die hierdurch gebildete Kommunikationsverbindung braucht nicht nur unidirektional zu sein, sondern kann - abhängig vom Kommunikationsprotokoll - auch bidirektional ausgeführt sein, beispielsweise nach Art eines voll-Duplex-Verfahrens oder dergleichen. Die Kommunikationsendgeräte sind zu diesem Zweck entsprechend ausgebildet. Vorzugsweise weisen sie jeweils eine Sendeeinrichtung und eine Empfangseinrichtung auf.

Um einen jeweiligen Kanal der mehrkanaligen leitungsgebundenen Kommunikationsverbindung bereitzustellen, sieht das Kommunikationsprotokoll in der Regel ebenfalls vor, dass jedem der Kanäle der mehrkanaligen leitungsgebundenen Kommunikationsverbindung zumindest einer der Signalträger individuell zugeordnet ist. Dadurch können Kommunikationskanäle geschaffen werden, die nahezu unabhängig voneinander zur Kommunikation zwischen den wenigstens zwei Kommunikationsendgeräten genutzt werden können. Beispielsweise können hierzu orthogonale Signalträger genutzt werden. Natürlich kann die Orthogonalität auch durch das Modulationsverfahren realisiert sein oder dergleichen.

Darüber hinaus kann auch vorgesehen sein, dass ein Kommunikationskanal mehr als einen der Signalträger individuell zugeordnet bekommt. Weiterhin besteht natürlich auch die Möglichkeit, dass während des bestimmungsgemäßen Betriebs die Zuordnung der Signalträger zu jeweiligen der Kanäle je nach Kommunikationsaufkommen variiert wird. Auch hierzu kann das Kommunikationsprotokoll entsprechende Regelungen umfassen, die es den Kommunikationsendgeräten ermöglichen, die Zuordnung der Signalträger zu den jeweiligen Kanälen bedarfsgerecht einstellen zu können.

Als Modulationsverfahren können unterschiedlichste Modulationsverfahren zum Einsatz kommen, zum Beispiel eine Amplitudenmodulation, eine Frequenzmodulation, aber auch ein orthogonales Frequenzumtastverfahren (Englisch: orthogonal frequency-division multiplexing, OFDM), eine Quadraturamplitudenmodulation (Englisch: quadrature amplitude modulation, QAM), eine Phasenmodulation, Kombinationen hiervon oder dergleichen. Natürlich können sowohl analoge Modulationsverfahren als auch digitale Modulationsverfahren sowie Kombinationen hiervon vorgesehen sein.

Gattungsgemäße Verfahren und Kommunikationseinrichtungen und Kommunikationsendgeräte beziehen sich also unter anderem auch auf Feld-BUS Systeme. Ein Feld-BUS ist ein BUS-System, das in einem System Feldgeräte wie Messfühler, Sensoren, Stellglieder, Aktoren, und/oder dergleichen kommunikationstechnisch koppelt, insbesondere mit einer Steuereinrichtung, die zum Beispiel ein Automatisierungsgerät oder dergleichen sein kann. Zu diesem Zweck dient insbesondere wenigstens eine Kommunikationsleitung, die die Feldgeräte und die Steuerungseinrichtung hardwaretechnisch miteinander koppelt. Um die Kommunikation über die Kommunikationsleitung hinsichtlich einer ungestörten Kommunikation der Feldgeräte und der Steuereinrichtung untereinander zu gewährleisten, ist das Kommunikationsprotokoll vorgesehen, welches regelt beziehungsweise festlegt, auf Basis welcher Technologie und unter Nutzung welcher Eigenschaften die Kommunikation der Feldgeräte und der Steuereinrichtung untereinander erfolgt. Ein Feld-BUS System kann zum Beispiel ein asymmetrischer digitaler Teilnehmeranschluss (Englisch: asymmetric digital subscriber line, ADSL), ein drahtloses lokales Netzwerk (Englisch: wireless local area network, WLAN), ein Powerline wie zum Beispiel HomePlugAV, HomePlugGP oder dergleichen sein. Mit der zunehmenden Verbreitung derartiger Systeme kommt der Trennung verschiedener Netze, Segmente, insbesondere Kommunikationsleitungen, zunehmende Bedeutung zu.

Bei der Nutzung leitungsgebundener Kommunikationsverbindungen, insbesondere mehrkanaliger leitungsgebundener Kommunikationsverbindungen, hat es sich gezeigt, dass Leitungslängen, Diskontinuitäten sowie insbesondere auch Diskontinuitäten in der Leitungsführung der Kommunikationsleitungen sowie unter anderem auch Fehlanpassungen in Bezug auf die Kommunikationsleitungen zu Reflexionen führen können. Dies wird in der Elektrotechnik unter anderem im Sachzusammenhang mit der Leitungsanpassung behandelt.

Dabei basiert die Leitungsanpassung auf dem Gedanken, dass einem elektrischen Kabel, insbesondere einer elektrischen Leitung, ein Wellenwiderstand zugeordnet werden kann. Eine Anpassung liegt dann vor, wenn an einem Leitungsende einer jeweiligen der Kommunikationsleitungen ein angeschlossenes Gerät eine Impedanz bereitstellt, die dem Wellenwiderstand im Wesentlichen entspricht. Weicht die Impedanz hingegen vom Wellenwiderstand der elektrischen Leitung ab, kann es zur Ausbildung von Reflexionen kommen. Hierbei kann es zur Ausbildung von stehenden Wellen kommen, insbesondere bei Frequenzen, deren Wellenlänge in einem ganzzahligen, vielfachen Verhältnis zu einem Vielfachen der Leitungslänge der Kommunikationsleitung ist oder einem Leitungsabschnitt mit fehlangepasstem Ende steht.

Wie gezeigt werden kann, kann es in der Folge bei derartigen Frequenzen als Signalträgern zu einem verstärkten Übersprechen beziehungsweise Nebensprechen zwischen Nachbarsegmenten, zum Beispiel anderen Kommunikationsleitungen, sowie auch Signalträgern beziehungsweise Kanälen kommen. Bei größeren Frequenzen ist in der Regel mit einem größeren Übersprechen beziehungsweise Nebensprechen zu rechnen, weil hier Vielfache der vorgenannten Art dichter zusammenliegen und ganzzahlige Vielfache praktisch für jede größere Leitungslänge, beispielsweise mehrere Meter oder dergleichen, vorliegen können. Darüber hinaus ist zu beachten, dass in einem Bereich von mehreren Wellenlängen der Leitungslänge in diesen Fällen häufig lediglich geringeren Güten erreicht werden, sodass diese breitbandig angeregt werden können. Bezüglich allgemeiner elektrotechnischer Grundlagen in Bezug auf elektrische Leitungen wird deshalb insbesondere auch auf Nachrichtentechnik, dritte Auflage, Band II, Nachrichtenübertragung von W. Ruprecht, Springer Verlag 1982 oder dergleichen verwiesen.

Im Stand der Technik ist es bereits bekannt, ein Übersprechen beziehungsweise Nebensprechen dadurch zu reduzieren oder zu vermeiden, indem Leitungsenden entsprechend angepasst terminiert werden. Darüber hinaus kann bei Signalträgern, die große Frequenzen nutzen, ein Modulieren mit einem geringeren Modulationsgrad, zum Beispiel mit einer reduzierten Amplitude, durch das Kommunikationssignal vorgesehen sein. So wird zum Beispiel bei einem Feld-BUS System wie HomePlug zum Einhalten von Normen in Bezug auf die elektromagnetische Verträglichkeit in der Regel vorgesehen, dass bei einer Frequenz des Signalträgers größer als 28MHz eine um etwa 30dB reduzierte Leistung genutzt wird. Dabei wird berücksichtigt, dass gemäß den geltenden vorgenannten Normen eine Störstrahlung erst ab einer Frequenz von oberhalb 30MHz gemessen wird.

Darüber hinaus ist es bekannt, Frequenzmultiplexing zum Beispiel bei Powerline-Systemen zu nutzen, um ein Übersprechen beziehungsweise Nebensprechen zwischen Nachbarsegmenten zu vermeiden, beziehungsweise die dort beschriebenen Übergangssegmente beziehungsweise Überlappungsbereiche besser zu erreichen. Zu diesem Zweck können unterschiedliche Frequenzbänder auf unterschiedlichen Leitungen genutzt werden.

Die Kommunikationsleitung braucht also nicht nur zwei elektrische Leitungen aufzuweisen, sondern sie kann darüber hinaus auch insbesondere weitere elektrische Leitungen, vorzugsweise Paare von elektrischen Leitungen, eines Kabels aufweisen, die zur Bereitstellung der Kommunikationsverbindung genutzt werden können. In diesem Fall kann ein Leitungspaar zum Beispiel ein Segment bilden.

Der Erfindung liegt die Aufgabe zugrunde, die mehrkanalige leitungsgebundene Kommunikationsverbindung über eine Kommunikationsleitung zu verbessern, insbesondere in Bezug auf ein Übersprechen zwischen den wenigstens zwei Kommunikationsleitungen.

Als Lösung werden mit der Erfindung ein Verfahren, sowie auch ein Kommunikationsendgerät gemäß den unabhängigen Ansprüchen vorgeschlagen.

Vorteilhafte Weiterbildungen ergeben sich durch Merkmale der abhängigen Ansprüche.

Bezüglich eines gattungsgemäßen Verfahrens wird vorgeschlagen, dass sendeseitig auf einer ersten der wenigstens zwei Kommunikationsleitungen eine Sendeleistung der Signalträger und empfangsseitig auf einer zweiten der wenigstens zwei Kommunikationsleitungen eine Empfangsempfindlichkeit für diese Signalträger derart eingestellt wird, dass empfangsseitig in Bezug auf die zweite der wenigstens zwei Kommunikationsleitungen eine Empfängersignalstärke der Signalträger der ersten der wenigstens zwei Kommunikationsleitungen kleiner als ein vorgegebener Vergleichswert ist.

Bezüglich einer gattungsgemäßen Kommunikationseinrichtung wird vorgeschlagen, dass die jeweils wenigstens zwei Kommunikationsendgeräte ferner ausgebildet sind, sendeseitig auf einer ersten der wenigstens zwei Kommunikationsleitungen eine Sendeleistung der Signalträger und/oder empfangsseitig auf einer zweiten der wenigstens zwei Kommunikationsleitungen eine Empfangsempfindlichkeit für diese Signalträger derart einzustellen, dass empfangsseitig in Bezug auf die zweite der wenigstens zwei Kommunikationsleitungen eine Empfängersignalstärke der Signalträger der ersten der wenigstens zwei Kommunikationsleitungen kleiner als ein vorgegebener Vergleichswert ist.

Bezüglich eines gattungsgemäßen Kommunikationsendgeräts wird vorgeschlagen, dass dies als Kommunikationsendgerät der Kommunikationseinrichtung ausgebildet ist.

Die Erfindung basiert dabei auf den folgenden ergänzenden Überlegungen. So ist es möglich, das Übersprechen beziehungsweise Nebensprechen deutlich zu reduzieren, indem zum Beispiel während einer Inbetriebnahme-Phase des Verfahrens beziehungsweise der Kommunikationseinrichtung, die Frequenzen ermittelt werden, bei denen relevantes Übersprechen beziehungsweise Nebensprechen vorliegt. Dies kann zum Beispiel mittels eines Netzwerk-Analysators durchgeführt werden, der es ermöglicht, sämtliche Frequenzen innerhalb eines benutzten Frequenzbandes nacheinander in ein Segment beziehungsweise eine der wenigstens zwei Kommunikationsleitungen einzuspeisen und jeweils zu messen, mit welcher Empfängersignalstärke ein Empfangssignal in einem Nachbarsegment beziehungsweise einer zweiten wenigstens zwei Kommunikationsleitungen empfangen wird. Für die im tatsächlichen, bestimmungsgemäßen Betrieb durchgeführte Kommunikation brauchen dann lediglich die Signalträger mit den Frequenzen genutzt zu werden, bei denen eine ausreichende Dämpfung in Bezug auf das Übersprechen vorliegt.

Darüber hinaus besteht natürlich die Möglichkeit, für Signalträger beziehungsweise deren Frequenzen, bei denen ein relevantes Übersprechen beziehungsweise Nebensprechen zwischen zwei benachbarten Segmenten der Kommunikationsleitung vorliegt, mit einer geringeren Sendeleistung einzuspeisen, sodass bei benachbarten Segmenten beziehungsweise der zweiten der wenigstens zwei Kommunikationsleitungen kein relevantes Übersprechen mehr ermittelt werden kann.

Insbesondere für Powerline-basierte Kommunikationseinrichtungen gelten ferner die folgenden Definitionen:
Eine Amplitudenmap gibt für jeden Signalträger an, mit welcher Leistung dieser Signalträger gesendet werden soll.

Eine Tonemap gibt an, wieviele Bits auf einen jeweiligen Signalträger aufmoduliert werden können. Die Tonemap bezieht sich also auf eine digitale Signalübertragung. Weist eine Kommunikationsverbindung unter Nutzung eines Signalträgers eine geringe Dämpfung auf und gibt es auf der betreffenden der wenigstens zwei Kommunikationsleitungen keinen Störer bei dieser Frequenz, können daher viele Bits pro Symbol auf diesen Signalträger aufmoduliert werden. Bei HomePlug-Anwendungen wird häufig durch ein Verfahren bezüglich einer Kanalschätzung permanent versucht, möglichst viele Bits auf jeden der verfügbaren Signalträger aufzumodulieren, um eine Bandbreite stetig optimieren zu können.

Eine Tonemask gibt an, welche Frequenzen weder zum Senden von Signalträgern noch beim Empfangen berücksichtigt werden sollen.

Aus der IEE1901 ist es ferner bekannt, zum Maximieren einer Datenrate die Anzahl von Bits pro Signalträger solange zu erhöhen, bis eine Fehlerrate bei der Kommunikationsverbindung signifikant ansteigt. Wird ein Anstieg der Fehlerrate erkannt, wird die Anzahl der Bits pro Signalträger geringfügig verringert. Dadurch kann die Datenrate dynamisch an Umgebungsverhältnisse beziehungsweise die aktuell verfügbare Kanalkapazität angepasst werden.

Weiterhin kann vorgesehen sein, dass für jedes Segment beziehungsweise für jede der wenigstens zwei Kommunikationsleitungen eine Messeinrichtung vorgesehen ist, mittels der, vorzugsweise permanent, ermittelt werden kann, ob Signalträger aus anderen Segmenten beziehungsweise Kommunikationsleitungen empfangen werden können. Insbesondere kann hierbei ermittelt werden, auf welchen Frequenzen diese Signalträger empfangen werden können. So kann zum Beispiel vorgesehen sein, dass bei der zweiten der wenigstens zwei Kommunikationsleitungen ermittelt wird, auf welchen Frequenzen die Signalträger der ersten der wenigstens zwei Kommunikationsleitungen empfangen werden können. Es besteht dann die Möglichkeit, entweder sendeseitig bei den an die erste der wenigstens zwei Kommunikationsleitungen angeschlossenen Kommunikationsendgeräte dafür zu sorgen, dass gerade diese ermittelten Frequenzen für Signalträger nicht genutzt werden, zum Beispiel aus einem Amplitudenmap ausgeblendet werden, ein Modulationsgrad mit einem geringeren Modulationspegel realisiert wird, beispielsweise in der Amplitudenmap mit geringerer Leistung eingetragen werden, und/oder auch bezüglich der zweiten der wenigstens zwei Kommunikationsleitungen empfangsseitig von den an diese Kommunikationsleitung angeschlossenen Kommunikationsendgeräten ausgeblendet werden, beispielsweise über eine Tonemask und/oder dergleichen.

Eine Segmenttrennung, hier insbesondere die Entkopplung der wenigstens zwei Kommunikationsleitungen voneinander, braucht nicht ausschließlich mittels geeigneter Dämpfungswerte zu erfolgen, sondern es kann zusätzlich eine logistische Segmenttrennung vorgesehen sein, wie zum Beispiel eine Nutzung unterschiedlicher Netzwerkschlüssel in den unterschiedlichen Segmenten beziehungsweise in den unterschiedlichen Kommunikationsleitungen, wobei sämtliche Kommunikationsendgeräte, die an die gleiche der wenigstens zwei Kommunikationsleitungen angeschlossen sind, den gleichen Netzwerkschlüssel nutzen. Es besteht hier somit die Möglichkeit, eines der Kommunikationsendgeräte dazu zu ertüchtigen, als Messeinrichtung dafür zu dienen, Signalträger der anderen der wenigstens zwei Kommunikationsleitungen zu ermitteln, zu welchem Zweck dieses Kommunikationsendgerät vorgesehen sein kann, den dort genutzten Netzwerkschlüssel zu umfassen beziehungsweise nutzen zu können. Sendet dieses Kommunikationsendgerät mit der maximal möglichen Leistung sämtliche Signalträger und empfängt diese mit der maximalen Empfindlichkeit, kann hierdurch eine Tonemap als Messgröße für das Übersprechen beziehungsweise Nebensprechen der einzelnen Signalträger aus dem damit gemessenen Nachbarsegment beziehungsweise der anderen der wenigstens zwei Kommunikationsleitungen, verwendet werden.

Signalträger, insbesondere mit Trägerfrequenzen, die eine große Kanalkapazität ermöglichen, beispielsweise eine große Bitload, neigen dazu, in besonders großem Maß ein Übersprechen beziehungsweise Nebensprechen zu ermöglichen. Messungen an tatsächlich realisierten Kommunikationseinrichtungen haben gezeigt, dass diese Art der Messung ähnliche Messergebnisse hervorzubringen vermag, wie wenn die Messung mittels des Netzwerkanalysators durchgeführt wird. Es können die Kommunikationsendgeräte selbst genutzt werden und die Tonemap kann als Maß für das Übersprechen beziehungsweise das Nebensprechen bezüglich der einzelnen Signalträger genutzt werden.

Mit der Erfindung können die vorgenannten Methoden verbessert werden, weil die vorgenannten Methoden eher kompliziert sind und eine Implementierung bei Kommunikationseinrichtungen einen hohen Aufwand zur Folge haben kann. Zugleich kann das Übersprechen beziehungsweise das Nebensprechen trotzdem in nicht unerheblicher Weise bestehen bleiben.

Darüber hinaus ist zu beachten, dass insbesondere bei HomePlug-Anwendungen Änderungen an der Tonemask und der Amplitudenmap, die aufgrund von Messergebnissen geänderten werden müssten, nicht ohne einen Neustart der HomePlug-Anwendungen beziehungsweise einen Reboot möglich sind. Daher eigenen sich diese Methoden eher für den Zeitpunkt der Inbetriebnahme der Kommunikationseinrichtung und sind insbesondere nicht für nachfolgende Betriebszeitpunkte beziehungsweise Betriebsphasen geeignet.

Die Erfindung erlaubt es, die vorgenannten Nachteile dadurch zu vermeiden, dass die Leistung der genutzten Signalträger beziehungsweise deren Amplituden insgesamt, das heißt, also für sämtliche der auf der jeweiligen der Kommunikationsleitungen genutzten Signalträger, vorzugsweise gleichmäßig, so verändert wird, dass die Signalträger auf der anderen der wenigstens zwei Kommunikationsleitungen nach Möglichkeit nur noch kaum vorzugsweise nicht mehr wahrgenommen werden können. Dabei kann anstelle der beziehungswiese zusätzlich zur Anpassung, insbesondere Reduktion oder auch Erhöhung der Singalpegel, der Signalträger auch die Empfangsempfindlichkeit für diese Signalträger auf der anderen beziehungsweise auf der zweiten der wenigstens zwei Kommunikationsleitungen entsprechend reduziert oder erhöht werden. Dabei wird die Empfangsempfindlichkeit ebenfalls für vorzugsweise sämtliche der Signalträger entsprechend eingestellt, beispielsweise gleich. Dadurch kann auf einfache Weise eine Anpassung erreicht werden. Es brauchen also nicht individuell Leistungen von selektiven Signalträgern oder auch entsprechende Empfangsempfindlichkeiten eingestellt zu werden.

Die Empfängersignalstärke ist ein Messwert einer jeweiligen Empfangseinrichtung des jeweiligen Kommunikationsendgerätes. Die Empfängersignalstärke kann dazu genutzt werden, eine Größe zu ermitteln, dies er erlaubt, die Sendeleistung und/oder die Empfangsempfindlichkeit einstellen zu können. Zu diesem Zweck wird die Empfängersignalstärke mit dem vorgegebenen Vergleichswert verglichen. Solange die Empfängersignalstärke der Signalträger der ersten der wenigstens zwei Kommunikationsleitungen bei Empfangseinrichtungen von an der weiten der Kommunikationsleitungen angeschlossenen Kommunikationsendgeräten kleiner als der vorgegebene Vergleichswert ist, braucht eine Einstellung dem Grunde nach nicht vorgenommen zu werden. Vielmehr besteht die Möglichkeit, die Sendeleistung sogar zu erhöhen und/oder die Empfangsempfindlichkeit zu erhöhen. Ist hingegen die Empfängersignalstärke dieser Signalträger größer als der vorgegebene Vergleichswert oder auch gleich dem vorgegebenen Vergleichswert, kann die Sendeleistung und/oder auch die Empfangsempfindlichkeit entsprechend reduziert werden, bis die Empfängersignalstärke wieder kleiner als der vorgegebene Vergleichswert ist. Auf diese Weise kann eine einfache Adaption auch während des bestimmungsgemäßen Betriebs der Kommunikationseinrichtung realisiert werden.

Der vorgegebene Vergleichswert beziehungsweise der vorgebbare Vergleichswert wird vorzugsweise derart gewählt, dass die Kommunikation auf der zweiten der wenigstens zwei Kommunikationsleitungen im Wesentlichen ungestört von den Signalträgern auf der ersten der wenigstens zwei Kommunikationsleitungen erfolgen kann. Eine ungestörte Kommunikation kann beispielsweise dadurch ermittelt werden, dass eine Bandbreite für die Kommunikation größer als eine vorgegebene Mindestbandbreite ist. Darüber hinaus kann die ungestörte Kommunikation dadurch ermittelt werden, dass eine Anzahl von nutzbaren Signalträger größer als eine vorgegebene Mindestanzahl von Signalträgern ist und/oder eine Anzahl von pro Symbol übertragenbaren Bits insbesondere bei einer digitalen Kommunikation größer als eine vorgegebene Mindestanzahl ist. Schließlich kann die ungestörte Kommunikation auch dadurch ermittelt werden, dass eine Latenz bezüglich der Kommunikation kleiner als eine vorgegebene maximale Latenz ist. Dabei kann alternativ oder ergänzend auch eine Antwortzeit bezüglich eines jeweiligen Kommunikationspartners genutzt werden. Natürlich können auch Kombinationen hiervon oder dergleichen zum Ermitteln der ungestörten Kommunikation genutzt werden. Ungestört kann daher zum Beispiel auch umfassen, dass ein Testsignal zumindest von einem von zwei an die eine der wenigstens zwei Kommunikationsleitungen angeschlossenen Kommunikationsendgeräten gesendet und von dem zweiten Kommunikationsendgerät zuverlässig empfangen wird, und zwar trotz überlagerter Störungen und/oder Rauschen.

Dies berücksichtigt, dass bei hinreichend geringer Empfängersignalstärke eine Beeinträchtigung der Kommunikationsverbindung auf der zweiten der wenigstens zwei Kommunikationsleitungen im Wesentlichen nicht erfolgt. Vielmehr kann in diesem Fall erreicht werden, dass eine nahezu ungestörte Kommunikation mittels der Signalträger auf der zweiten der wenigstens zwei Kommunikationsleitungen erfolgen kann. Der Vergleichswert kann zum Beispiel ein werksseitig bei der Herstellung der Kommunikationseinrichtung vorgegebener Wert sein. Er kann jedoch auch ein bei einer Inbetriebnahme der Kommunikationseinrichtung eingegebener Wert sein. Darüber hinaus besteht natürlich auch die Möglichkeit, den Vergleichswert einstellbar zu realisieren, sodass der Vergleichswert abhängig von individuellen lokalen Umgebungseigenschaften vorgegeben werden kann, die die Kommunikationseinrichtung beeinflussen können.

So ist es möglich, dass die Kommunikationsleitungen sogar zumindest teilweise elektrisch miteinander gekoppelt sein können, wobei eine zuverlässige Kommunikationsverbindung trotzdem erreicht werden kann. Dieser Fall kann zum Beispiel auftreten, wenn eine Powerline-Kommunikation realisiert werden soll, wobei für unterschiedliche Gebäudeabschnitte lokale Kommunikationsnetzwerke bereitgestellt werden sollen. Beispielsweise kann vorgesehen sein, dass bei einem mehrgeschossigen Gebäude ein jeweiliges etagenbegrenztes Kommunikationsnetzwerk auf Basis von Powerline realisiert wird. Dadurch, dass die Energieversorgung für das Gebäude jedoch in der Regel zentralisiert ausgebildet ist, sind natürlich die Kommunikationsleitungen, die zugleich auch Energieversorgungsleitungen für die einzelnen Etagen sind, zumindest an einem Punkt auch elektrisch miteinander gekoppelt, sodass hierüber eine zumindest teilweise elektrische Kopplung der unterschiedlichen Kommunikationsnetze der unterschiedlichen Etagen erfolgen kann.

Die Empfangsempfindlichkeit ist eine einstellbare Größe der Empfangseinrichtungen der Kommunikationsendgeräte, sodass die Kommunikationsendgeräte eine bestimmungsgemäße, zuverlässige Kommunikation ermöglichen können.

Der Vergleichswert kann ein elektrisches Signal sein, das mit einem geeigneten Signalwert, beispielsweise einem elektrischen Strom, einer elektrischen Spannung oder dergleichen, dargestellt sein kann. Es kann aber auch ein digitales, insbesondere binäres Signal sein, das in einer Speichereinheit abrufbar gespeichert sein kann. Die Sende- und/oder die Empfangseinrichtungen können entsprechend ausgebildet sein, damit die gewünschten Einstellungen abhängig vom Vergleichswert vorgenommen werden können.

Mit der Erfindung ist es möglich, auf einfache Weise diese Kopplung festzustellen und durch einfache Maßnahmen diese Kopplung soweit zu reduzieren, dass etagenweise eine zuverlässige Kommunikationsverbindung beziehungsweise ein lokales etagenweises Kommunikationsnetzwerk realisiert werden kann, was weitgehend von den jeweils anderen etagenweisen Kommunikationsnetzwerken entkoppelt ist.

Die Erfindung eignet sich allerdings nicht nur für den Einsatz in der Gebäudetechnik, sondern kann zum Beispiel auch bei Fertigungsstraßen oder dergleichen zum Einsatz kommen, bei denen ebenfalls abgegrenzte Kommunikationsnetzwerke gewünscht sind. Beispielsweise kann dies bei Feld-BUS Systemen der Fall sein, bei denen in der Regel die Anzahl der Kommunikationsendgeräte, die an eine Steuereinrichtung angeschlossen werden können, begrenzt sind. Es kann dann erforderlich sein, mehrere voneinander unabhängige Feld-BUS Systeme vorzusehen. Auch hier kann eine unerwünschte Kopplung der Kommunikationsleitungen für die unterschiedlichen Feld-BUS Systeme auftreten, sodass, wenn keine Maßnahmen zur Entstörung getroffen werden, die Kommunikation beeinträchtigt sein kann. Mit der Erfindung kann auf einfache Weise Abhilfe geschaffen werden. Darüber hinaus eignet sich die Erfindung natürlich auch insbesondere dazu, bereits bestehende Systeme nachzurüsten und somit eine verbesserte Kommunikation zu ermöglichen.

Die Kopplung braucht nicht nur elektrisch zu sein, sondern sie kann zum Beispiel auch kapazitiv und/oder induktiv erfolgen, zum Beispiel wenn die Kommunikationsleitungen parallel zueinander verlegt sind oder dergleichen. Auch mechanische Aufbauten, gemeinsame Entstörfilter, ein gemeinsam genutztes elektrisches Bezugspotential und/oder dergleichen können dazu führen, dass entsprechende Kopplungen auftreten, insbesondere auch dann, wenn Leitungsabschlüsse der Kommunikationsleitungen lediglich ungenügend angepasst sind, sodass Reflexionen, insbesondere an den Leitungsenden, auftreten. Hier besteht dann eine besondere Gefahr des Übersprechens beziehungsweise Nebensprechens.

Gemäß einer vorteilhaften Weiterbildung wird vorgeschlagen, dass die Sendeleistung dieser Signalträger und/oder die Empfangsempfindlichkeit für diese Signalträger gleich eingestellt werden. Dies hat den Vorteil, dass ein individuelles Einstellen der Sendeeinrichtungen für diese Signalträger beziehungsweise auch der Empfangseinrichtungen nicht vorgesehen zu werden braucht. Vielmehr reicht es aus, eine gemeinsame Einstellung vorzusehen. Dadurch kann ein besonders einfaches Realisieren der Erfindung erreicht werden.

Weiterhin kann vorgesehen sein, dass der Vergleichswert derart vorgegeben wird, dass auf der zweiten der wenigstens zwei Kommunikationsleitungen durch Demodulation der jeweiligen der Signalträger, das heißt, die Signalträger, die auf der zweiten der wenigstens zwei Kommunikationsleitungen genutzt werden, die mit diesen Signalträgern auf der zweiten der wenigstens zwei Kommunikationsleitungen übermittelten Kommunikationssignale ungestört ermittelt werden. Hier kann also vorteilhaft die Kommunikation auf der zweiten der Kommunikationsleitungen genutzt werden, um den Vergleichswert festzulegen, mit dem die Leistung der Signalträger auf der ersten der wenigstens zwei Kommunikationsleitungen und/oder die Empfangsempfindlichkeit auf der zweiten der wenigstens zwei Kommunikationsleitungen eingestellt werden kann. Insgesamt kann die Qualität der Kommunikation auf der zweiten der wenigstens zwei Kommunikationsleitungen zum Bestimmen beziehungsweise Vorgeben des Vergleichswerts genutzt werden.

Ferner wird vorgeschlagen, dass der Vergleichswert bei einer Inbetriebnahme der Kommunikation vorgegeben wird. Diese Weiterbildung hat den Vorteil, dass der Vergleichswert lediglich einmal eingestellt zu werden braucht. Besonders vorteilhaft erweist sich diese Ausgestaltung für den Fall, dass die Kommunikationseinrichtung fest installiert ist. Es kann aber auch vorgesehen sein, dass der Vergleichswert einstellbar ist, was sich als vorteilhaft erweist, wenn die Kommunikationseinrichtung beispielsweise eine mobile Kommunikationseinrichtung ist und der Aufbau bedarfsweise variiert. Dies hat unter Umständen auch Auswirkungen auf die Kopplung zwischen den wenigstens zwei Kommunikationsleitungen, sodass eine entsprechende Einstellung des Vergleichswerts gewünscht sein kann.

Darüber hinaus wird vorgeschlagen, dass der Vergleichswert zu vorgegebenen Zeitpunkten angepasst wird. Diese Ausgestaltung ermöglicht es, den Vergleichswert auch während des bestimmungsgemäßen Betriebs der Kommunikationseinrichtung bedarfsgerecht anzupassen, beispielsweise wenn an der Kommunikationseinrichtung Änderungen vorgenommen werden, die die Kopplung der wenigstens zwei Kommunikationsleitungen betreffen und/oder dergleichen. Darüber hinaus können Maßnahmen auch einen Leitungsabschluss betreffen, sodass dies Auswirkungen auf Reflexionen oder dergleichen hat, die gleichermaßen Auswirkungen auf die Kommunikation haben können. Es kann daher auch vorgesehen sein, den Vergleichswert nahezu dynamisch anzupassen, sodass eine möglichst optimale Kommunikation auch bei variierenden Umgebungsbedingungen realisiert werden kann. Die Zeitpunkte können äquidistant gewählt sein, beispielsweise in einem Minutenabstand, einem Stundenabstand oder auch in einem Abstand von einem oder mehreren Tagen. Die Wahl der vorgegebenen Zeitpunkte braucht aber nicht äquidistant gewählt zu werden, sondern kann je nach Anwendung auch variierende Zeitabstände umfassen. Insbesondere besteht die Möglichkeit, auch eine nahezu kontinuierliche Anpassung vorzusehen, indem entsprechende Messergebnisse nahezu kontinuierlich ermittelt werden, um daraus den Vergleichswert ermitteln zu können.

Gemäß einer Weiterbildung wird vorgeschlagen, dass zum Vorgeben des Vergleichswerts auf der zweiten der wenigstens zwei Kommunikationsleitungen bei einer vorgegebenen Empfangsempfindlichkeit Empfängersignalstärken von den Signalträgern der ersten der wenigstens zwei Kommunikationsleitungen ermittelt werden und der Vergleichswert abhängig von den Empfängersignalstärken von den Signalträgern der ersten der wenigstens zwei Kommunikationsleitungen vorgegeben wird. Im Allgemeinen kann die vorgegebene Empfangsempfindlichkeit zum Beispiel eine eingestellte Empfangsempfindlichkeit oder auch eine zwischen der eingestellten und einer maximalen Empfangsempfindlichkeit gewählte Empfangsempfindlichkeit sein. Die Empfangsempfindlichkeit kann auch einen vorbestimmten Wert haben, der insbesondere zum Ermitteln des Vergleichswerts spezifisch eingestellt wird. Es ist hierdurch möglich, eine Automatisierung des Vorgebens des Vergleichswerts zu erreichen, wobei der Vergleichswert automatisiert bedarfsgerecht angepasst werden kann. Dadurch kann die Kommunikationseinrichtung der Erfindung hochflexibel bei unterschiedlichsten Anwendungen zum Einsatz kommen und zugleich weitgehend die entsprechend der jeweiligen Umgebungsbedingungen möglichst optimale Kommunikation zu ermöglichen. Dadurch können Einstell- und/oder Wartungsarbeiten reduziert, wenn nicht sogar vollständig eingespart werden.

Weiterhin wird vorgeschlagen, dass ein Meldesignal ausgegeben wird, wenn der Vergleichswert derart vorgegeben wird, dass eine Kanalkapazität für die Signalträger der zweiten der wenigstens zwei Kommunikationsleitungen kleiner als ein vorgegebener Kanalkapazitätsvergleichswert ist. Mit dem Kanalkapazitätsvergleichswert wird eine minimale Kanalkapazität vorgegeben, die mit der Kommunikationseinrichtung, insbesondere in Bezug auf die zweite der wenigstens zwei Kommunikationsleitungen, erreicht werden soll, damit eine bestimmungsgemäße zuverlässige Kommunikation auf der zweiten der wenigstens zwei Kommunikationsleitungen erreicht werden kann.

Dem Grunde nach kann dies natürlich umgekehrt auch für die anderen der Kommunikationsleitungen gelten. Das Meldesignal wird also ausgegeben, wenn mit der erfindungsgemäßen Verfahrensführung eine zuverlässige bestimmungsgemäße Kommunikation nicht erreichbar ist und weitere Maßnahmen getroffen werden müssen, die ein hinreichendes Entkoppeln der wenigstens zwei der Kommunikationsleitungen ermöglichen. Solche Entkopplungsmaßnahmen können zum Beispiel das Nutzen von Schirmungen, ein Aufheben einer Parallelverlegung der Kommunikationsleitungen und/oder dergleichen sein. Der Kanalkapazitätsvergleichswert gibt bei einer digitalen Kommunikation zum Beispiel eine minimale Datenrate oder dergleichen an. Dies kann natürlich für jede der wenigstens zwei Kommunikationsleitungen entsprechend durchgeführt werden. Das Meldesignal kann darüber hinaus bereits dann erzeugt werden, wenn auch nur bei einer der wenigstens zwei Kommunikationsleitungen die Kanalkapazität kleiner als der vorgegebene Kanalkapazitätsvergleichswert ist.

Weiterhin wird vorgeschlagen, dass die Empfangsempfindlichkeit eine Dämpfung bezüglich des Empfangs der Signalträger umfasst, die abhängig von dem Vergleichswert eingestellt wird. Zu diesem Zweck können die Empfangseinrichtungen der Kommunikationsendgeräte entsprechende Dämpfungselemente beziehungsweise Dämpfungsschaltungen umfassen, die eine einstellbare Dämpfung realisieren können. Der Vergleichswert kann ein elektrisches Signal sein, mittels dem die entsprechende Dämpfungsschaltung hinsichtlich der Dämpfung gesteuert werden kann.

Die für das erfindungsgemäße Verfahren angegebenen Vorteile und Wirkungen gelten natürlich im gleichen Maße auch für die Kommunikationseinrichtung sowie für das Kommunikationsendgerät und umgekehrt. Entsprechend können für Verfahrensmerkmale auch Vorrichtungsmerkmale und umgekehrt formuliert sein.

Weitere Vorteile und Merkmale sind der folgenden Beschreibung eines Ausführungsbeispiels zu entnehmen. In dem Ausführungsbeispiel bezeichnen gleiche Bezugszeichen gleiche Merkmale und Funktionen.

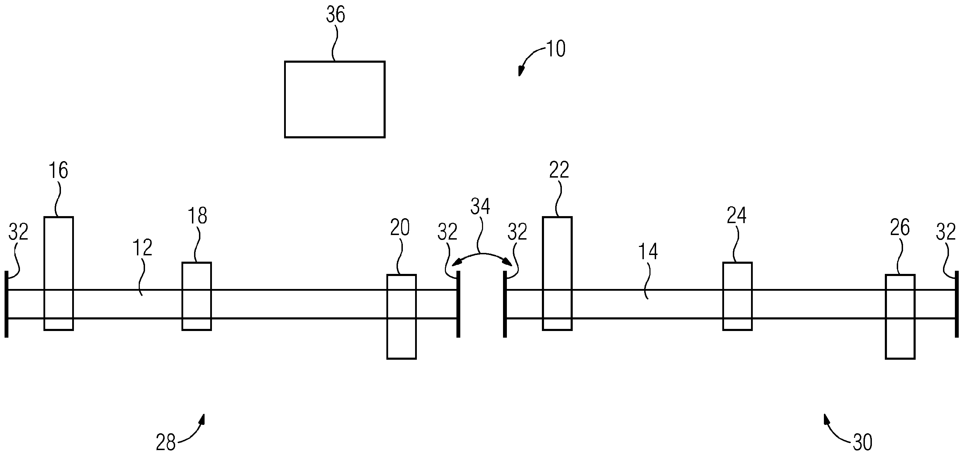

Es zeigt die einzige Figur in einer schematischen Darstellung eine Kommunikationseinrichtung gemäß der Erfindung mit zwei Feld-BUS Systemen, die teilweise induktiv und kapazitiv gekoppelt sind, wobei an jedem der Feld-BUS Systeme jeweils Kommunikationsendgeräte angeschlossen sind, um über den jeweiligen Feld-BUS eine Kommunikationsverbindung zum Austauschen von Daten zu nutzen.

Die Figur zeigt in einer schematischen Ansicht eine Kommunikationseinrichtung 10, die dazu dient, eine Kommunikationsverbindung zwischen an die Kommunikationseinrichtung 10 angeschlossenen Kommunikationsendgeräten 16, 18, 20, 22, 24, 26 zu ermöglichen. Die Kommunikationsendgeräte 16, 18, 20, 22, 24, 26 können Sensoren, Aktoren, Datenverarbeitungseinrichtungen, Steuereinrichtungen und/oder dergleichen sein. Die Kommunikationseinrichtung 10 kann somit zum Beispiel dazu dienen, in einer Fertigungsstraße die unterschiedlichsten Einrichtungen kommunikationstechnisch nach Art von Feld-BUS Systemen zu koppeln.

Die Kommunikationseinrichtung 10 weist eine erste Kommunikationsleitung 12 auf, die vorliegend als Zweidrahtleitung ausgebildet ist. Darüber hinaus weist die Kommunikationseinrichtung 10 eine zweite, von der ersten Kommunikationsleitung 12 elektrisch getrennte zweite Kommunikationsleitung 14 auf, die ebenfalls als Zweidrahtleitung ausgebildet ist. Jede der beiden Kommunikationsleitungen 12, 14 ist an ihren jeweiligen Enden mit einer jeweiligen Abschlussimpedanz 32 abgeschlossen, wobei die Abschlussimpedanz 32 derart gewählt ist, dass möglichst wenig Reflexionen an dem jeweiligen Leitungsende der Kommunikationsleitungen 12, 14 entsteht. Die Kommunikationsleitungen 12, 14 sind induktiv und kapazitiv teilweise miteinander gekoppelt, was durch den Doppelpfeil 34 symbolisch dargestellt ist.

Durch die Kommunikationsleitungen 12, 14 werden Segmente 28, 30 der Kommunikationseinrichtung 10 gebildet. Das erste Segment 28 umfasst die Kommunikationsleitung 12, an welcher die Kommunikationsendgeräte 16, 18, 20 angeschlossen sind. Über die Kommunikationsleitung 12 können die Kommunikationsendgeräte 16, 18, 20 miteinander kommunizieren, und zwar unter Nutzung eines vorgegebenen Kommunikationsprotokolls. Dadurch können die Kommunikationsendgeräte 16, 18, 20 über die Kommunikationsleitung 12 eine leitungsgebundene Kommunikationsverbindung nutzen.

Die Kommunikationsendgeräte 16, 18, 20 sind ausgebildet, zum Kommunizieren über die Kommunikationsleitung 12 das Kommunikationsprotokoll zu nutzen, das ein Senden und ein Empfangen von Kommunikationssignalen der Kommunikationsendgeräte 16, 18, 20 regelt. Zu diesem Zweck umfassen die Kommunikationsendgeräte 16, 18, 20 jeweilige Sendeeinrichtungen und Empfangseinrichtungen, die in der Figur jedoch nicht dargestellt sind. Das Kommunikationsprotokoll sieht vor, dass Signalträger für die Kommunikation genutzt werden, die vorliegend durch ausgewählte Trägerfrequenzen gebildet sind. Die Signalträger werden mittels einem durch das Kommunikationsprotokoll vorgegebenen Modulationsverfahren entsprechend von Kommunikationssignalen, die zwischen den Kommunikationsendgeräten 16, 18, 20 ausgetauscht werden sollen, moduliert. Vorliegend wird als Modulationsverfahren ein QAM-Modulationsverfahren genutzt. Bei den alternativen Ausgestaltungen können hier natürlich auch andere Kommunikationsverfahren zum Einsatz kommen.

Dem Grunde nach ist das zweite Segment 30 mit der Kommunikationsleitung 14, an die die Kommunikationsendgeräte 22, 24, 26 angeschlossen sind, bezüglich der Kommunikation im Wesentlichen gleich aufgebaut, weshalb diesbezüglich auf die vorhergehenden Ausführungen zum Segment 28 verwiesen wird. Durch die Segmente 28, 30 können somit jeweilige Feld-BUS Systeme bereitgestellt werden.

Aufgrund der Kopplung, die durch den Doppelpfeil 34 dargestellt ist, kann der Fall auftreten, dass Signalträger, die im ersten Segment 28 zur Kommunikation zwischen den Kommunikationsendgeräten 16, 18, 20 genutzt werden, auf die Kommunikationsleitung 14 des zweiten Segments 30 übergekoppelt werden, beispielsweise aufgrund von Übersprechen beziehungsweise Nebensprechen. Dies kann die Kommunikation im zweiten Segment 30 stören. Dem Grunde nach gilt das Gleiche natürlich auch in umgekehrter Richtung.

Um nun trotz dieser Kopplung der Segmente 28, 30 innerhalb des jeweiligen der Segmente 28, 30 eine zuverlässige Kommunikation zwischen den jeweils an die jeweiligen Kommunikationsleitungen 12, 14 angeschlossenen Kommunikationsendgeräte 16, 18, 20, 22, 24, 26 zu ermöglichen, ist nun das folgende Verfahren vorgesehen, das durch die Kommunikationseinrichtung 10 ausgeführt wird. Die Kommunikationseinrichtung 10 kann zu diesem Zweck eine übergeordnete Steuereinrichtung 36 umfassen.

Die Erfindung soll nun anhand von Beispielen der Kopplung vom ersten Segment 28 zum zweiten Segment 30 exemplarisch erläutert werden, wobei natürlich dem Grunde nach das gleiche Vorgehen auch für den umgekehrten Fall anwendbar ist.

In der vorliegenden Ausgestaltung ist vorgesehen, dass die Kommunikationsendgeräte 16, 18, 20, ausgebildet sind, mittels ihrer jeweiligen Sendeeinrichtungen auf der ersten Kommunikationsleitung 12 eine Sendeleistung der dort genutzten Signalträger einstellen zu können. Dabei erfolgt die Einstellung der Sendeleistung derart, dass empfangsseitig in Bezug auf die zweite Kommunikationsleitung 14 eine Empfängersignalstärke der Signalträger, insbesondere in Bezug auf die Kommunikationsendgeräte 22, 24, 26 kleiner als ein vorgegebener Vergleichswert ist. Der Vergleichswert ist dabei derart gewählt, dass bei einer kleineren Empfängersignalstärke als dem Vergleichswert eine zuverlässige Kommunikation der Kommunikationsendgeräte 22, 24, 26 über die zweite Kommunikationsleitung 14 im zweiten Segment 30 gewährleistet werden kann. Trotz dieser Kopplung des ersten Segments 28 mit dem zweiten Segment 30 kann somit eine zuverlässige Kommunikation erreicht werden. Zugleich kann die Kommunikation der Kommunikationsendgeräte 16, 18, 20 über die erste Kommunikationsleitung 12 im ersten Segment 28 somit aufrechterhalten bleiben. Aus dem Vergleich der Empfängersignalstärken mit dem Vergleichswert kann somit ein Sendesteuersignal zum Steuern der jeweiligen Sendeleistungen der Sendeeinrichtungen des ersten Segments 28 ermittelt werden.

Ergänzend oder alternativ kann auch vorgesehen sein, dass empfangsseitig auf der zweiten Kommunikationsleitung 14 eine Empfangsempfindlichkeit für die Signalträger aus dem ersten Segment 28 derart eingestellt werden, dass empfangsseitig in Bezug auf die zweite Kommunikationsleitung 14 die Empfängersignalstärke der Signalträger der ersten Kommunikationsleitung 12 kleiner als der vorgegebene Vergleichswert ist. Bei dieser Ausgestaltung der Erfindung braucht also im ersten Segment 28 kein Eingriff zu erfolgen. Die Empfangssignalstärke kann dadurch eingestellt werden, dass die Kommunikationsendgeräte 22, 24, 26 in ihren Empfangseinrichtungen eine Dämpfungsschaltung aufweisen, die ausgebildet ist, abhängig von einem geeigneten Empfangssteuersignal die Dämpfung entsprechend einstellen zu können. Das Empfangssteuersignal kann ebenfalls aus dem Vergleich mit dem Vergleichswert ermittelt werden. Es kann auch das gleiche Signal wie das Sendesteuersignal sein. Diese Dämpfungsschaltung kann natürlich für die Kommunikationsendgeräte 16, 18, 20 ebenso vorgesehen sein und genutzt werden, insbesondere wenn der umgekehrte Kopplungsfall betrachtet wird.

Je nach Bedarf kann natürlich auch vorgesehen sein, dass die beiden Ausgestaltungen, die zuvor beschrieben worden, auch in Kombination miteinander angewendet werden, was sich insbesondere auch dann als vorteilhaft erweist, wenn beide Kopplungsrichtungen gleichzeitig zu berücksichtigten sind. Mit der Erfindung ist es also möglich, auf einfache Weise auch bei bestehenden Kommunikationseinrichtungen der gattungsgemäßen Art eine einfache kostengünstige Realisierung der Erfindung vorzusehen. Die Realisierung ist auch deshalb besonders einfach, weil die entsprechenden Geräte und Einrichtungen häufig hardwaretechnisch kaum nachgerüstet zu werden brauchen.

Die Erfindung ist natürlich nicht darauf beschränkt, lediglich zwei Kommunikationsleitungen beziehungsweise zwei Segmente zu nutzen. Die Anzahl der Segmente beziehungsweise Kommunikationsleitungen kann natürlich nahezu beliebig groß sein. Dabei kann natürlich auch berücksichtigt werden, dass bei mehr als zwei Segmenten beziehungsweise zwei Kommunikationsleitungen die Kopplungen untereinander sehr unterschiedlich ausfallen können, wodurch natürlich auch die jeweiligen Vergleichswerte entsprechend gewählt sein können. So kann auch mehr als lediglich ein Vergleichswert vorgesehen sein, um jeweilige Sendeeinrichtungen und/oder Empfangseinrichtungen einstellen zu können.

Besonders vorteilhaft erweist es sich ferner, wenn der Vergleichswert durch die Steuereinrichtung 36 ermittelt und vorgegeben werden kann. Zu diesem Zweck können die Kommunikationsendgeräte 16, 18, 20, 22, 24, 26 mit der Steuereinrichtung 36 kommunikationstechnisch in Verbindung stehen. Dies erlaubt es, auch während des bestimmungsgemäßen Betriebs eine nahezu automatisierte Anpassung an optimale Kommunikationsbedingungen in den jeweiligen Segmenten 28, 30 erreichen zu können. Die Ausführungsbeispiele dienen ausschließlich der Erläuterung der Erfindung und sollen diese nicht beschränken.

Zusammenfassend betrifft die Erfindung ein Verfahren zum Kommunizieren zwischen jeweils wenigstens zwei an eine jeweilige von wenigstens zwei gekoppelten Kommunikationsleitungen 12, 14 angeschlossenen Kommunikationsendgeräten 16, 18, 20, 22, 24, 26, bei dem zum Kommunizieren über die jeweilige der Kommunikationsleitungen 12, 14 ein Kommunikationsprotokoll genutzt wird, das ein Senden und ein Empfangen von Kommunikationssignalen der jeweiligen der wenigstens zwei Kommunikationsendgeräte 16, 18, 20, 22, 24, 26 regelt, zu welchem Zweck Signalträger genutzt werden, wobei sendeseitig auf einer ersten der wenigstens zwei Kommunikationsleitungen 12 eine Sendeleistung der Signalträger und empfangsseitig auf einer zweiten der wenigstens zwei Kommunikationsleitungen 14 eine Empfangsempfindlichkeit für diese Signalträger derart eingestellt wird, dass empfangsseitig in Bezug auf die zweite der wenigstens zwei Kommunikationsleitungen 14 eine Empfängersignalstärke der Signalträger der ersten der wenigstens zwei Kommunikationsleitungen 12 kleiner als ein vorgegebener Vergleichswert ist.

## Patentansprüche

1. Verfahren zum Kommunizieren zwischen jeweils wenigstens zwei an eine jeweilige von wenigstens zwei zumindest teilweise, induktiv und/oder kapazitiv gekoppelten Kommunikationsleitungen (12, 14) angeschlossenen Kommunikationsendgeräten (16, 18, 20, 22, 24, 26),
wobei zum Kommunizieren über die jeweilige der wenigstens zwei Kommunikationsleitungen (12, 14) ein Kommunikationsprotokoll genutzt wird, das ein Senden und ein Empfangen von Kommunikationssignalen der jeweiligen der wenigstens zwei Kommunikationsendgeräte (16, 18, 20, 22, 24, 26) regelt, zu welchem Zweck Signalträger genutzt werden,
wobei sendeseitig auf einer ersten der wenigstens zwei Kommunikationsleitungen (12) eine Sendeleistung der Signalträger und empfangsseitig auf einer zweiten der wenigstens zwei Kommunikationsleitungen (14) eine Empfangsempfindlichkeit für diese Signalträger derart eingestellt wird, dass empfangsseitig in Bezug auf die zweite der wenigstens zwei Kommunikationsleitungen (14) eine Empfängersignalstärke der Signalträger der ersten der wenigstens zwei Kommunikationsleitungen (12) kleiner als ein vorgegebener Vergleichswert ist,
**dadurch gekennzeichnet, dass** die Empfängersignalstärke ein Messwert einer jeweiligen Empfangseinrichtung des jeweiligen Kommunikationsendgerätes ist, die Empfängersignalstärke kann dazu genutzt werden, eine Größe zu ermitteln, die es erlaubt, die Sendeleistung und/oder die Empfangsempfindlichkeit einstellen zu können, wobei dazu die Empfängersignalstärke mit dem vorgegebenen Vergleichswert verglichen wird, wobei der vorgegebene Vergleichswert derart gewählt wird, dass die Kommunikation auf der zweiten der wenigstens zwei Kommunikationsleitungen (12, 14) im Wesentlichen ungestört von den Signalträgern auf der ersten der wenigstens zwei Kommunikationsleitungen (12, 14) erfolgen kann, dazu wird der Vergleichswert derart vorgegeben, dass auf der zweiten der wenigstens zwei Kommunikationsleitungen (12, 14) durch Demodulation der jeweiligen der Signalträger die mit diesen Signalträgern auf der zweiten der wenigstens zwei Kommunikationsleitungen (12, 14) übermittelten Kommunikationssignale ungestört ermittelt werden.

2. Verfahren nach Anspruch 1, wobei die Sendeleistung dieser Signalträger und/oder diese Empfangsempfindlichkeit für diese Signalträger gleich eingestellt wird.

3. Verfahren nach einem der vorhergehenden Ansprüche, wobei der Vergleichswert bei einer Inbetriebnahme der Kommunikation vorgegeben wird.

4. Verfahren nach einem der vorhergehenden Ansprüche, wobei der Vergleichswert zu vorgegebenen Zeitpunkten angepasst wird.

5. Verfahren nach einem der vorhergehenden Ansprüche, wobei zum Vorgeben des Vergleichswerts auf der zweiten der wenigstens zwei Kommunikationsleitungen (14) bei vorgegebener Empfangsempfindlichkeit Empfängersignalstärken von den Signalträgern der ersten der wenigstens zwei Kommunikationsleitungen (12) ermittelt werden und der Vergleichswert abhängig von den Empfängersignalstärken von den Signalträgern der ersten der wenigstens zwei Kommunikationsleitungen (12) vorgegeben wird.

6. Verfahren nach Anspruch 5, wobei ein Meldesignal ausgegeben wird, wenn der Vergleichswert derart vorgegeben wird, dass eine Kanalkapazität für die Signalträger der zweiten der wenigstens zwei Kommunikationsleitungen (14) kleiner als ein vorgegebener Kanalkapazitätsvergleichswert ist.

7. Verfahren nach einem der vorhergehenden Ansprüche, wobei die Empfangsempfindlichkeit eine Dämpfung bezüglich des Empfangs der Signalträger umfasst, die abhängig von dem Vergleichswert eingestellt wird.

8. Verfahren nach einem der vorhergehenden Ansprüche, wobei die Signalträger mittels wenigstens eines durch das Kommunikationsprotokoll vorgegebenen Modulationsverfahrens entsprechend der Kommunikationssignale moduliert werden.

9. Kommunikationsendgerät (16, 18, 20, 22, 24, 26) ausgebildet zum Kommunizieren über wenigstens zwei zumindest teilweise, induktiv und/oder kapazitiv gekoppelte Kommunikationsleitungen (12, 14) mit einem weiteren Kommunikationsendgerät (16, 18, 20, 22, 24, 26),
weiterhin ausgebildet ein Kommunikationsprotokoll zu nutzen, das ein Senden und ein Empfangen von Kommunikationssignalen der Kommunikationsendgeräte (16, 18, 20) regelt, zu welchem Zweck Signalträger genutzt werden, zu diesem Zweck umfassen die Kommunikationsendgeräte (16, 18, 20) jeweilige Sendeeinrichtungen und Empfangseinrichtungen,
weiterhin ausgestaltet sendeseitig auf einer ersten der wenigstens zwei Kommunikationsleitungen (12) eine Sendeleistung der Signalträger und empfangsseitig auf einer zweiten der wenigstens zwei Kommunikationsleitungen (14) eine Empfangsempfindlichkeit für diese Signalträger derart einzustellen, dass empfangsseitig in Bezug auf die zweite der wenigstens zwei Kommunikationsleitungen (14) eine Empfängersignalstärke der Signalträger der ersten der wenigstens zwei Kommunikationsleitungen (12) kleiner als ein vorgegebener Vergleichswert ist,
**dadurch gekennzeichnet, dass** eine Erfassungseinrichtung zum Erfassen einer Empfängersignalstärke vorhanden ist und dass die Empfängersignalstärke ein Messwert der Empfangseinrichtung des jeweiligen Kommunikationsendgerätes ist,
weiterhin ausgestaltet die Empfängersignalstärke dazu zu nutzen, eine Größe zu ermitteln, die es erlaubt, die Sendeleistung und/oder die Empfangsempfindlichkeit einstellen zu können, wobei dazu die Empfängersignalstärke mit dem vorgegebenen Vergleichswert verglichen wird, wobei der vorgegebene Vergleichswert derart gewählt wird, dass die Kommunikation auf der zweiten der wenigstens zwei Kommunikationsleitungen (12, 14) im Wesentlichen ungestört von den Signalträgern auf der ersten der wenigstens zwei Kommunikationsleitungen (12, 14) erfolgen kann, dazu wird der Vergleichswert derart vorgegeben, dass auf der zweiten der wenigstens zwei Kommunikationsleitungen (12, 14) durch Demodulation der jeweiligen der Signalträger die mit diesen Signalträgern auf der zweiten der wenigstens zwei Kommunikationsleitungen (12, 14) übermittelten Kommunikationssignale ungestört ermittelt werden,
wobei ein Mittel zum Einstellen einer Sendeleistung und/oder einer Empfangsempfindlichkeit ausgestaltet ist,
aus dem Vergleich der Empfängersignalstärken mit dem Vergleichswert ein Sendesteuersignal zum Steuern der jeweiligen Sendeleistungen der Sendeeinrichtungen und ein Empfangssteuersignal zum Einstellen der Empfangssignalstärke in den Empfangseinrichtungen zu ermitteln.

## Claims

1. Method for communication between in each case at least two communication terminal devices (16, 18, 20, 22, 24, 26) that are connected to a respective one of at least two at least partly inductively and/or capacitively coupled communication lines (12, 14),
wherein a communication protocol is utilised for communication over the respective one of the at least two communication lines (12, 14), and the communication protocol controls transmitting and receiving of communication signals of the respective ones of the at least two communication terminal devices (16, 18, 20, 22, 24, 26), for which purpose signal carriers are utilised,
wherein on the transmission side, on a first of the at least two communication lines (12), a transmission power of the signal carriers is set up and on the receiving side, on a second of the at least two communication lines (14), a receiving sensitivity to these signal carriers is set up such that on the receiving side, in relation to the second of the at least two communication lines (14), a receiving signal strength of the signal carriers of the first of the at least two communication lines (12) is smaller than a predetermined comparison value,
**characterised in that** the receiving signal strength is a measured value of a respective receiving device of the respective communication terminal device, the receiving signal strength can be utilised to determine a variable that makes it possible to adjust the transmission power and/or receiving sensitivity, wherein to this end the receiving signal strength is compared with the predetermined comparison value, wherein the predetermined comparison value is selected such that communication over the second of the at least two communication lines (12, 14) can proceed substantially undisrupted by the signal carriers on the first of the at least two communication lines (12, 14), to this end the comparison value is predetermined such that, over the second of the at least two communication lines (12, 14), by demodulating the respective ones of the signal carriers, the communication signals transmitted with these signal carriers over the second of the at least two communication lines (12, 14) are determined to be undisrupted.

2. Method according to claim 1, wherein the transmission power of these signal carriers and/or this receiving sensitivity to these signal carriers is set to be the same.

3. Method according to one of the preceding claims, wherein the comparison value is predetermined at the time of startup of communication.

4. Method according to one of the preceding claims, wherein the comparison value is adapted at predetermined time points.

5. Method according to one of the preceding claims, wherein, for the purpose of predetermining the comparison value, receiving signal strengths of the signal carriers of the first of the at least two communication lines (12) are determined over the second of the at least two communication lines (14) with a predetermined receiving sensitivity, and the comparison value is predetermined in dependence on the receiving signal strengths of the signal carriers of the first of the at least two communication lines (12).

6. Method according to claim 5, wherein a message signal is output if the comparison value is predetermined such that a channel capacity for the signal carriers of the second of the at least two communication lines (14) is smaller than a predetermined channel capacity comparison value.

7. Method according to one of the preceding claims, wherein the receiving sensitivity includes a damping of receiving of the signal carriers that is set in dependence on the comparison value.

8. Method according to one of the preceding claims, wherein the signal carriers are modulated using at least one modulation method, predetermined by the communication protocol, in accordance with the communication signals.

9. Communication terminal device (16, 18, 20, 22, 24, 26) embodied to communicate with a further communication terminal device (16, 18, 20, 22, 24, 26) over at least two at least partly inductively and/or capacitively coupled communication lines (12, 14),
furthermore embodied to utilise a communication protocol, which controls transmitting and receiving of communication signals of the communication terminal devices (16, 18, 20), for which purpose signal carriers are utilised, for which purpose the communication terminal devices (16, 18, 20) comprise respective transmitting devices and receiving devices,
furthermore embodied to set up on the transmission side, on a first of the at least two communication lines (12), a transmission power of the signal carriers and on the receiving side, on a second of the at least two communication lines (14), a receiving sensitivity to these signal carriers, such that on the receiving side, in relation to the second of the at least two communication lines (14), a receiving signal strength of the signal carriers of the first of the at least two communication lines (12) is smaller than a predetermined comparison value
**characterised in that**
a detection device for detecting a receiving signal strength is present and the receiving signal strength is a measured value of the receiving device of the respective communication terminal device,
furthermore embodied to utilise the receiving signal strength to determine a variable that makes it possible to adjust the transmission power and/or receiving sensitivity, wherein to this end the receiving signal strength is compared with the predetermined comparison value, wherein the predetermined comparison value is selected such that communication over the second of the at least two communication lines (12, 14) can proceed substantially undisrupted by the signal carriers on the first of the at least two communication lines (12, 14), to this end the comparison value is predetermined such that, over the second of the at least two communication lines (12, 14), by demodulating the respective ones of the signal carriers, the communication signals transmitted with these signal carriers over the second of the at least two communication lines (12, 14) are determined to be undisrupted,
wherein an arrangement for setting a transmission power and/or a receiving sensitivity is embodied,
by comparing the receiving signal strengths with the comparison value, to determine a transmission control signal for controlling the respective transmission powers of the transmission devices and a receiving control signal for setting the receiving signal strengths in the receiving devices.

## Revendications

1. Procédé de communication entre respectivement au moins deux terminaux (16, 18, 20, 22, 24, 26) de communication raccordés à l'une respective d'au moins deux lignes (12, 14) de communication couplées au moins en partie inductivement et/ou capacitivement, dans lequel, pour communiquer par la une respective des au moins deux lignes (12, 14) de communication, on utilise un protocole de communication, qui règle une émission et une réception de signaux de communication des au moins deux terminaux (16, 18, 20, 22, 24, 26) de communication respectifs, à quelle fin on utilise des supports de signaux,
dans lequel on règle, du côté de l'émission sur une première des au moins deux lignes (12) de communication, une puissance d'émission des porteurs de signaux et, du côté de la réception sur une deuxième des au moins deux lignes (14) de communication, une sensibilité à la réception de ces supports de signaux, de manière à avoir, du côté de la réception par rapport à la deuxième des au moins deux lignes (14) de communication, une intensité du signal de réception des supports de signaux de la première des au moins deux lignes (12) de communication plus petite qu'une valeur de comparaison donnée à l'avance,
**caractérisé en ce que** l'intensité du signal de réception est une valeur de mesure d'un dispositif respectif de réception du terminal respectif de communication, l'intensité du signal de réception peut être utilisée pour déterminer une grandeur, qui permet de pouvoir régler la puissance d'émission et/ou la sensibilité à la réception, dans lequel à cet effet, on compare l'intensité du signal de réception à la valeur de comparaison donnée à l'avance, dans lequel on choisit la valeur de comparaison donnée à l'avance, de manière à pouvoir effectuer la communication sur la deuxième des au moins deux lignes (12, 14) de communication sensiblement sans être perturbé par les porteurs de signaux sur la première des au moins deux lignes (12, 14) de communication, on prescrit à cet effet la valeur de comparaison, de manière à déterminer, sans perturbation, sur la deuxième des au moins deux lignes (12, 14) de communication par démodulation des supports de signaux , les signaux de communication transmis par ces supports de signaux sur la deuxième des au moins deux lignes (12, 14) de communication.

2. Procédé suivant la revendication 1, dans lequel on règle à une valeur égale la puissance d'émission de ces supports de signaux et/ou cette sensibilité à la réception de ces supports de signaux.

3. Procédé suivant l'une des revendications précédentes, dans lequel on prescrit la valeur de comparaison lors d'une mise en fonctionnement de la communication.

4. Procédé suivant l'une des revendications précédentes, dans lequel on adapte la valeur de comparaison à des instants donnés à l'avance.

5. Procédé suivant l'une des revendications précédentes, dans lequel, pour la prescription de la valeur de comparaison sur la deuxième des au moins deux lignes (14) de communication, on détermine, à la sensibilité à la réception donnée à l'avance, des intensités de signal de réception des supports de signaux de la première des au moins deux lignes (12) de communication et on prescrit la valeur de comparaison en fonction des intensités de signal de réception des supports de signaux de la première des au moins deux lignes (12) de communication.

6. Procédé suivant la revendication 5, dans lequel on émet un signal témoin, si on prescrit la valeur de comparaison, de manière à ce qu'une capacité de canal pour les supports de signaux de la deuxième des au moins deux lignes (14) de communication est plus petite qu'une valeur de comparaison de capacité de canal donnée à l'avance.

7. Procédé suivant l'une des revendications précédentes, dans lequel la sensibilité à la réception comprend une atténuation en ce qui concerne la réception des supports de signaux, que l'on règle en fonction de la valeur de comparaison.

8. Procédé suivant l'une des revendications précédentes, dans lequel on module conformément aux signaux de communication les supports de signaux au moyen d'au moins un procédé de modulation prescrit par le protocole de communication.

9. Terminal (16, 18, 20, 22, 24, 26) de communication constitué pour communiquer, par l'intermédiaire d'au moins deux lignes (12, 14) de communication couplées au moins en partie inductivement et/ou capacitivement, avec un autre terminal (16, 18, 20, 22, 24, 26) de communication,
constitué en outre pour utiliser un protocole de communication, qui règle une émission et une réception de signaux de communication des terminaux (16, 18, 20) de communication, à quelle fin on utilise des supports de signaux, les terminaux (16, 18, 20) de communication comprenant à cette fin des dispositifs respectifs d'émission et de réception,
conformé en outre pour régler, du côté de l'émission, sur une première des au moins deux lignes (12) de communication, une puissance d'émission des porteurs de signaux et, du côté de la réception, sur une deuxième des au moins deux lignes (14) de communication, une sensibilité à la réception de ces supports de signaux, de manière à avoir, du côté de la réception, par rapport à la deuxième des au moins deux lignes (14) de communication, une intensité du signal de réception des supports de signaux de la première des au moins deux lignes (12) de communication plus petite qu'une valeur de comparaison donnée à l'avance,
**caractérisé**
**en ce qu'**il y a un dispositif de détection pour la détection d'une intensité du signal de réception et en ce que l'intensité du signal de réception est une valeur de mesure du dispositif de réception du terminal respectif de communication,
conformé en outre, pour utiliser les intensités du signal de réception afin de déterminer une grandeur, qui permet de pouvoir régler la puissance d'émission et/ou la sensibilité à la réception, dans lequel à cet effet, on compare l'intensité du signal de réception à la valeur de comparaison donnée à l'avance, dans lequel on choisit la valeur de comparaison donnée à l'avance, de manière à pouvoir effectuer la communication sur la deuxième des au moins deux lignes (12, 14) de communication sensiblement sans être perturbé par les porteurs de signaux sur la première des au moins deux lignes (12, 14) de communication, on prescrit à cet effet la valeur de comparaison, de manière à déterminer, sans perturbation, sur la deuxième des au moins deux lignes (12, 14) de communication par démodulation des supports de signaux , les signaux de communication transmis par ces supports de signaux sur la deuxième des au moins deux lignes (12, 14) de communication,
dans lequel, au moyen de réglage d'une puissance d'émission et/ou d'une sensibilité à la réception, est conformé, de manière à déterminer, à partir de la comparaison des intensités du signal de réception à la valeur de comparaison, un signal de commande d'émission pour commander les puissances respectives d'émission des dispositifs d'émission et un signal de commande de réception pour régler les intensités du signal de réception dans les dispositifs de réception.
